(19) **Europäisches Patentamt**
**European Patent Office**
**Office européen des brevets**

(11) **EP 2 479 868 A1**

(12) **EUROPEAN PATENT APPLICATION**

(43) Date of publication:
**25.07.2012 Bulletin 2012/30**

(51) Int Cl.:
**H02J 7/35** (2006.01)

(21) Application number: **11152030.0**

(22) Date of filing: **25.01.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Oy
00380 Helsinki (FI)**

(72) Inventors:
• **Tuusa, Heikki
33710, Tampere (FI)**

• **Jussila, Matti T.
01610, Vantaa (FI)**
• **Nurmi, Jukka
01690, Vantaa (FI)**
• **Viitanen, Tero
01710, Vantaa (FI)**

(74) Representative: **Valkeiskangas, Tapio Lassi
Paavali
Kolster Oy Ab
Iso Roobertinkatu 23
P.O. Box 148
00121 Helsinki (FI)**

(54) **Method and apparatus for controlling voltages over series-connected dc power supplies**

(57)     An apparatus for controlling voltages over series-connected DC power supplies (1.1 - 1.$m$), comprising an inverter (2) comprising a positive input, a negative input, and means for controlling a voltage between the inputs. The apparatus also comprises a first series connection of two or more capacitors (3.1 - 3.$m$) between the inverter (2) inputs. The apparatus further comprises one or more balancing units (5.1 - 5.$m$-1) connected between the inverter (2) inputs, comprising means for controlling ratios between first series connection capacitor voltages.

Figure 7

EP 2 479 868 A1

**Description**

FIELD OF THE INVENTION

The present invention relates to arrangements with series-connected DC power supplies and particularly to controlling voltages of the DC power supplies.

BACKGROUND INFORMATION

A DC device, in general, is an apparatus which operates on continuous or sequential unidirectional flow of charge. Typically it means an apparatus which operates on a constant voltage or current. The apparatus may be, for instance, a power supply, or a load.

When two or more DC devices are supplying, or are supplied by, an inverter, they can be connected in parallel or in series. An inverter typically comprises a capacitor DC link, which has an operational range for its voltage. The DC devices connect to the DC link. If the DC devices are connected in parallel, they have a same DC voltage over them. In the case of series connection, the DC devices have a same DC current flowing through all of them.

DC devices may require operation at differing voltages and differing currents. For example, for a solar panel, a maximum efficiency is achieved at a Maximum Power Point (MPP), which defines an output current on the basis of an output voltage, or vice versa. Solar panels of a solar power application may have different MPPs, for instance because of lighting conditions.

Traditionally, solar panels in three-phase solar inverter applications are connected to a common DC link through one or more voltage boost switching mode power supplies (SMPS). Output voltages of the solar panels are converted to a level more suitable for the DC link by the SMPS.

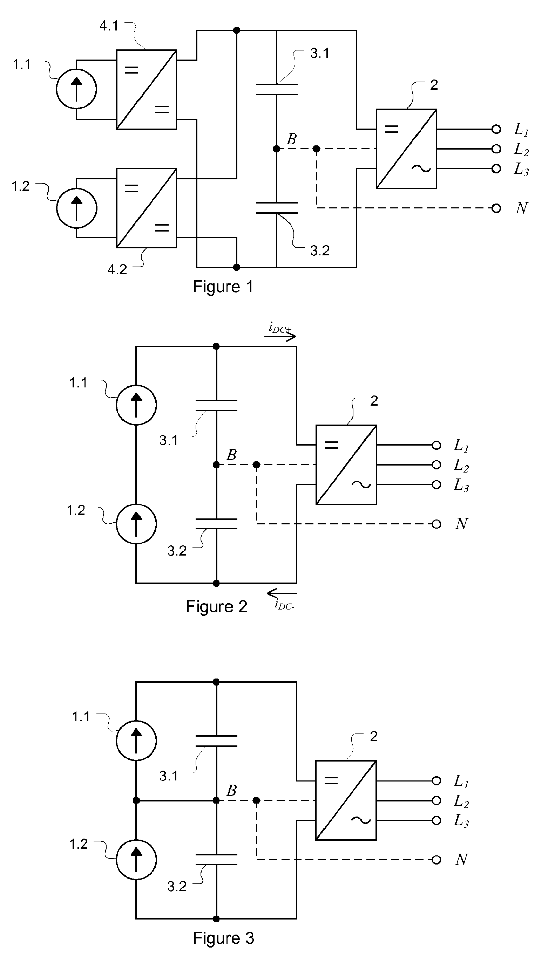

Figure 1 illustrates a simplified diagram of an arrangement where a switching mode power supply is used for each solar panel. Solar panels 1.1 and 1.2 are connected to an inverter 2 through switching mode power supplies 4.1 and 4.2. The inverter transfers power produced by the solar panels to a three-phase grid comprising phases $L_1$, $L_2$, and $L_3$. A DC link comprising two capacitors 3.1 and 3.2 is connected between the inverter inputs to form an energy storage. An interconnection point B may be connected to a neutral input of the inverter and a neutral conductor of the grid.

As switching mode power supplies are used between the solar panels and the DC link, the voltages and currents of the solar panels can be controlled individually, and practical voltage ranges for the panels and the DC link can be achieved. A disadvantage associated with the above arrangement is that use of switching mode power supplies between each solar panel and the DC link lowers the efficiency of the arrangement.

The output voltages of DC power supplies may also be brought to a more practical level by connecting them in series. Figure 2 illustrates a series connection of DC power supplies 1.1 and 1.2. An inverter 2 transfers power produced by the solar panels to a grid. A DC link comprising two capacitors 3.1 and 3.2 is connected between the inverter inputs to form an energy storage. An interconnection point B may be connected to a neutral input of the inverter 2 and a neutral conductor of the grid.

The series connection of DC power supplies, as illustrated in Figure 2, requires only one voltage conversion. Thus, the efficiency is better. However, controlling a voltage over an individual DC power supply is not possible since a same current $i_{dc+} = i_{DC}$ flows through them both. This makes the series connection of the DC power supplies, as illustrated in Figure 2, unsuitable for, for instance, solar power applications where solar panels operate at their individual MPPs.

SUMMARY

An object of the present invention is to provide a method and an apparatus for implementing the method so as to alleviate the above disadvantages. The objects of the invention are achieved by a method and an apparatus which are characterized by what is stated in the independent claims. Preferred embodiments of the invention are disclosed in the dependent claims.

Voltages and/or currents of series-connected DC power supplies can be controlled by using one or more balancing units capable of controlling ratios between voltages of the DC power supplies. The balancing unit or units are connected in parallel with the series connection of the DC power supplies. The voltage over the whole series connection may be controlled with the inverter.

The balancing unit or balancing units enable control of individual voltages and currents of the DC power supplies. The efficiency is improved, since the balancing units are not on a main route of the current. Only a power required to control the voltages over the DC power sources has to pass through the balancing units.

BRIEF DESCRIPTION OF THE DRAWINGS

In the following, the disclosure will be described in greater detail by means of preferred embodiments with reference to the accompanying drawings, in which

Figure 1 illustrates a simplified diagram of an arrangement where a switching mode power supply is used for each solar panel;
Figure 2 illustrates a series connection of DC power supplies;
Figure 3 illustrates a series connection of DC power supplies with improved controllability;
Figure 4 illustrates an apparatus for controlling voltages over series-connected DC power supplies;
Figure 5 illustrates an arrangement with an example of a balancing unit;
Figure 6 illustrates another example of a balancing unit;
Figure 7 illustrates an arrangement, where m solar panels are connected in series between inputs of an inverter;
Figure 8 illustrates electrical quantities when a neutral conductor connection to a first series connection of capacitors is used;
Figure 9 illustrates an example of a control method according to the disclosure; and
Figure 10 illustrates an arrangement with a three-level inverter bridge.

DETAILED DESCRIPTION

The limited controllability of the arrangement in Figure 2 may be improved as illustrated in Figure 3. An arrangement in Figure 3 is similar to the arrangement in Figure 2 except that an interconnection point $B$ between capacitors 3.1 and 3.2 is connected to an interconnection point between DC power supplies 1.1 and 1.2.

Since the states of both DC power supplies 1.1 and 1.2 are known, energy production may be better optimized. A DC link voltage may, for instance, be set to be twice the voltage of a DC power supply producing the most power. Alternatively, the DC link voltage may be set to a level where the combined power output of the DC devices is maximized. This may mean that neither of the DC devices operates at their MPP. In general, if capacitor voltages are kept balanced, the optimization of the energy production is only partial.

A further advantage may be achieved if voltages of the capacitors 3.1 and 3.2 in Figure 3 do not have to be in balance. A grid neutral conductor $N$ may be connected to an interconnection point $B$ between the DC power supplies 1.1 and 1.2. A connection between the grid neutral conductor $N$ and the interconnection point $B$ between the DC power supplies 1.1 and 1.2 enables control of individual DC power supply voltages.

The inverter 2 may, for instance, comprise a three-phase and three-level inverter bridge. Voltage and power of one DC power supply is controlled with first half-waves of the inverter-produced grid currents, and the other DC power supply is controlled with the second half-waves.

However, imbalance may also be harmful, since fluctuating capacitor voltages may cause asymmetrical voltages in the output of the inverter. Compensating for the asymmetry may, in turn, cause a DC component or harmonic distortions to grid currents. The harmonic distortions of grid current and grid voltage asymmetry may limit the controllability of the capacitor voltages. Therefore, allowing imbalance in the capacitors does not ensure that the DC power supplies operate at their MPPs.

Further, as the arrangement illustrated in Figure 3 allows no zero-sequence component in the voltage references, minimum voltages for producing inverter voltages corresponding the grid voltages have to be higher.

An inverter with a neutral connection has its theoretical minimum for the DC link voltage at twice the grid phase voltage peak value: $2\hat{u}_{grid}$. In an European 400 V grid, this means a 654 V DC link voltage. If the neutral connection is not used, the theoretical minimum for the DC link voltage is $\sqrt{3}\hat{u}_{grid}$ , which is 566 V.

Even with limitations, the arrangement in Figure 3 provides a better controllability of individual DC power supply voltages than the arrangement in Figure 2. Connecting the neutral conductor $N$ to the interconnection point $B$ also practically eliminates a common-mode voltage of the DC link. In, for instance, solar applications, elimination of common-mode voltages can be crucial.

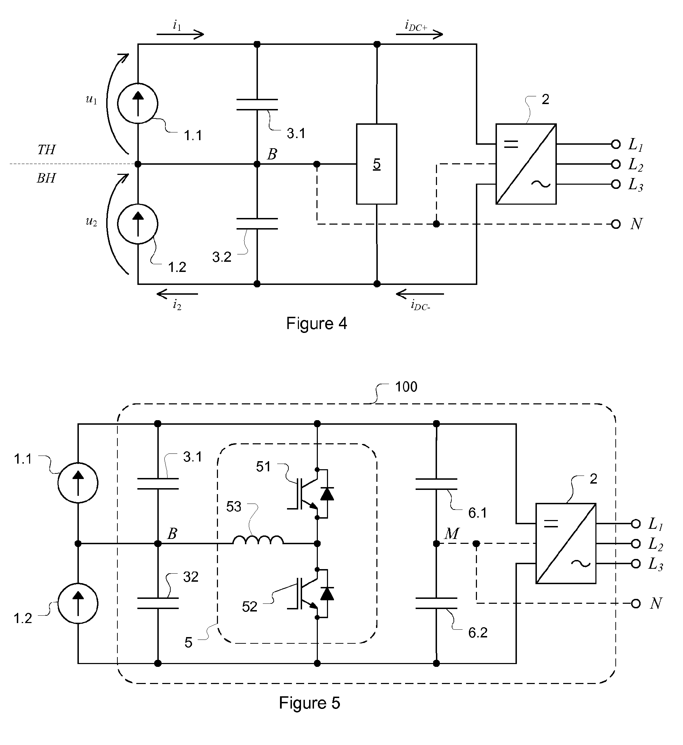

Limitations, such as the DC component of the grid currents, to the arrangement in Figure 3 may be reduced by adding a separate balancing unit to the arrangement. Figure 4 illustrates an apparatus 100 for controlling voltages over series-connected DC power supplies. The apparatus 100 comprises an inverter 2 and a first series connection of two or more capacitors between the inverter inputs. In Figure 4, two capacitors 3.1 and 3.2 are illustrated. The capacitors 3.1 and 3.2 form a DC link. Embodiments with more capacitors in series are disclosed below in this document. The inverter 2 comprises a positive input, a negative input, and means for controlling a voltage between the inputs. Both capacitors 3.1 and 3.2 comprise a first terminal and a second terminal.

The apparatus further comprises a first and a second connection terminal for each capacitor, wherein the first terminal is connected to a capacitor first terminal, and the second terminal is connected to a capacitor second terminal. The connection terminals are adapted to be connected to a DC power supply. In Figure 4, DC power supplies 1.1 and 1.2 are connected between the first connection terminals and second connection terminals, thus forming a series connection.

The inverter 2 transfers power produced by the DC power supplies 1.1 and 1.2 to a grid. The grid comprises three phases $L_1$, $L_2$, and $L_3$. In Figure 4, the grid also comprises a neutral conductor $N$.

In Figure 4, a balancing unit 5 is connected between the inverter 2 inputs. However, the number of balancing units is not restricted to one. There may be as many balancing units as there are interconnections between capacitors in the first series connection of capacitors. For instance, in an embodiment with a first series connection of three capacitors, there may be two balancing units.

A balancing unit comprises means for controlling a ratio between first series connection capacitor voltages. In Figure 4, the balancing unit 5 comprises a first supply terminal connected to the inverter 2 positive input, a second supply terminal connected to the inverter 2 negative input, and a control terminal connected to an interconnection point $B$ of two capacitors 3.1 and 3.2 in the first series connection of capacitors. The inverter may have a neutral input, which may be connected to the interconnection point $B$. A grid neutral conductor $N$ may also be connected to the interconnection point $B$.

To control the ratio between first series connection capacitor 3.1 and 3.1 voltages, the balancing unit 5 may further comprise means for controlling a current through the control terminal.

The balancing unit 5 divides the series connection of DC power supplies and capacitors into two halves: a top half $TH$ and a bottom half $BH$. The balancing unit 5 is used for transferring energy from one half to another so that the voltages over DC power supplies 1.1 and 1.2 remain at desired levels. At the same time, the inverter 2 modulates symmetrically so that the power transferred by it remains constant, and the positive and negative half-waves of the grid currents become equal in size.

In order to keep voltages of capacitors 3.1 and 3.2 stable, a grid power $P_G$ has to be equal with the sum of power produced by the DC power supplies 1.1 and 1.2, when the inverter 2 is assumed lossless:

$$P_G = P_1 + P_2 \qquad (1)$$

When no neutral connection is used, a same current $i_{DC+} = i_{DC-}$ flows through both halves. The same current flows through the inverter positive and negative input. At a stationary operating point, the current may be represented by a constant DC link positive side current $I_{DC+}$ and negative side current $I_{DC-}$. Using the power balance equation 1, the DC link positive side current $I_{DC+}$ and negative side current $I_{DC-}$ can be calculated as:

$$I_{DC+} = I_{DC-} = \frac{U_1 I_1 + U_2 I_2}{U_1 + U_2}. \qquad (2)$$

$U_1$ and $U_2$ are constant voltages representing voltages $u_1$ and $u_2$ over the DC power supplies 1.1 and 1.2 at a stationary operating point. $I_1$ and $I_2$ are constant currents representing currents $i_1$ and $i_2$ of the DC power supplies 1.1 and 1.2 at a stationary operating point.

In order for voltages of capacitors 3.1 and 3.2 to remain constant in steady-state, a current through them has to be zero, and power has to be moved through the balancing unit 5. In steady-state, no energy is stored in to or discharged from the capacitors 3.1 and 3.2. The balancing unit 5 produces no power and, ideally, consumes no power. Therefore, if an amount of power is transferred from one half $TH$ or $BH$ to the balancing unit 5, the same amount has to be transferred from the balancing unit 5 to the other half. The transferred powers for the top half $TH$ and the bottom half $BH$ are, respectively:

$$\Delta P_{TH} = U_1 I_1 - U_1 I_{DC+} = \frac{U_1 U_2 (I_1 - I_2)}{U_1 + U_2}, \qquad (3)$$

$$\Delta P_{BH} = U_2 I_2 - U_2 I_{DC-} = -\frac{U_1 U_2 (I_1 - I_2)}{U_1 + U_2} = -\Delta P_{TH} \ . \tag{4}$$

As no neutral connection is used, the inverter 2 uses a sum of voltages $u_1$ and $u_2$ as its supply voltage. The modulation method can be freely chosen, as long as the supply voltage is high enough to produce the grid-side AC-voltage.

The balancing unit 5 controls the voltages of the DC power supplies by transferring power, roughly half the difference $\Delta P_{DC}$ between the powers of the DC power supplies, from one half to another:

$$\frac{\Delta P_{DC}}{2} = \frac{U_1 I_1 - U_2 I_2}{2} \ . \tag{5}$$

The inverter 2 controls a power balance between the grid and the DC devices so that a sum of the voltages of the DC power supplies remains at a desired level. When no neutral connection is used, common-mode voltages of the DC link depend on the type of the inverter and the modulation method.

Figure 4 illustrates, in a dashed line, a connection between the grid neutral conductor $N$ and the interconnection point B. In order for the grid currents, and the powers transferred by the grid currents, to be equal in arrangements using a neutral connection, the average powers of the series connection halves $TH$ and $BH$ $are$ equal:

$$U_1 I_{DC+} = U_2 I_{DC-} \ . \tag{6}$$

At the same time, the grid power $P_G$ has to be same as the sum of the power of the series connection halves:

$$P_G = U_1 I_{DC+} + U_2 I_{DC-} \ . \tag{7}$$

From equations 6 and 7, the following equations can be derived for the DC link positive and negative side currents:

$$\begin{aligned} I_{DC+} &= \frac{U_1 I_1 - U_2 I_2}{2U_1} \\ I_{DC-} &= \frac{U_1 I_1 - U_2 I_2}{2U_2} \end{aligned} \ . \tag{8}$$

A power to be transferred from one half to another in order to even the powers of the top and bottom half is

$$\frac{\Delta P_{DC}}{2} = U_1 I_1 - U_1 I_{DC+} = \frac{U_1 I_1 - U_2 I_2}{2} \ . \tag{9}$$

In the arrangements using a neutral connection, each half of the DC link voltage has to be high enough to produce, by itself, a desired AC-voltage without a voltage zero-sequence component, which cannot be used because of the neutral connection. The balancing unit 5 controls the ratio between the DC power supply voltages, and the inverter 2 controls the voltage over all of the DC power supplies. The balancing unit can be implemented in various ways.

Figure 5 illustrates an arrangement with an example of a balancing unit. As in Figure 4, the apparatus comprises an inverter 2 and a first series connection of two capacitors 3.1 and 3.2 between the inverter inputs. The inverter 2 transfers powers produced by the DC power supplies 1.1 and 1.2 to a three-phase grid comprising phases $L_1$, $L_2$, and $L_3$.

A balancing unit 5 is connected from a first supply terminal to the inverter 2 positive input, and, from a second supply terminal connected to the inverter negative input. A control terminal is connected to an interconnection of two capacitors 3.1 and 3.2 in the first series connection of capacitors.

The balancing unit 5 comprises two switching devices 51 and 52 and an inductor 53 as means for controlling current through the control terminal. The switching devices 51 and 52 are connected in series between the first supply terminal and the second supply terminal. The inductor 53 is connected between an interconnection between the switching devices and the control terminal.

An interconnection point $B$ of the capacitors 3.1 and 3.2 may be separated from the neutral input of the inverter 2 and the neutral conductor N of the grid. In Figure 5, the apparatus comprises a second series connection of capacitors 6.1 and 6.2 between the inverter 2 terminals. The inverter 2 comprises a neutral input which is connected to an interconnection $M$ of the capacitors 6.1 and 6.2 of the second series connection. The balancing unit 5 may control the voltages of capacitor 3.1 and 3.2 without limitation. The potentials at points $B$ and $M$ may be different.

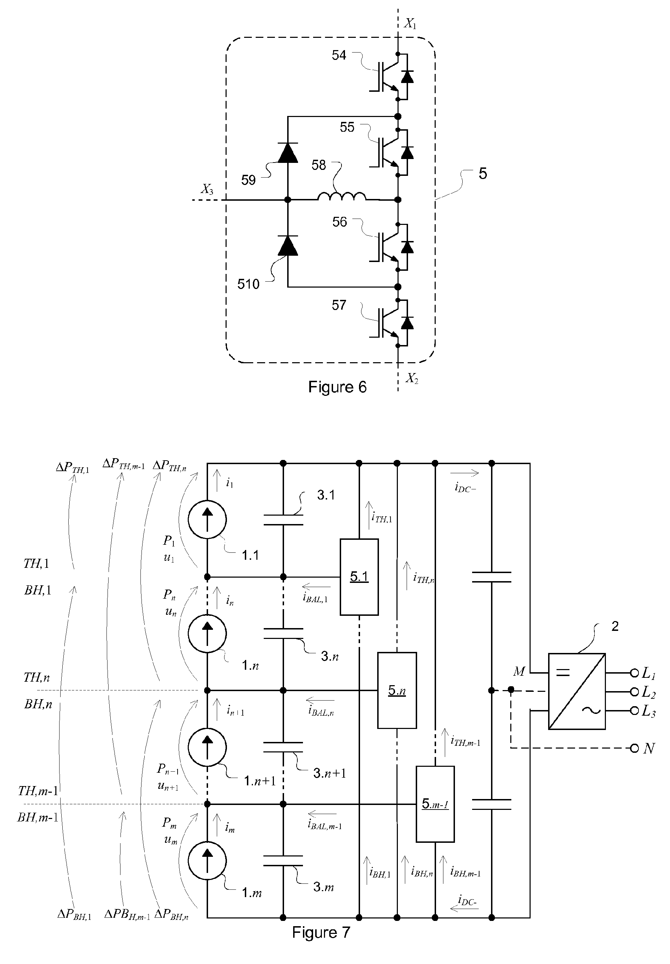

The circuitry of the balancing unit 5 illustrated in Figure 5 is only one example of possible implementations for a balancing unit. Other topologies may also be used. Figure 6 illustrates another example of a balancing unit. The balancing unit 5 comprises a first supply terminal $X_1$ adapted to be connected to the inverter 2 positive input, a second supply terminal $X_2$ adapted to be connected to the inverter 2 negative input, and a control terminal $X_3$ adapted to be connected to an interconnection point $B$ of two capacitors in the first series connection of capacitors.

The balancing unit 5 comprises four switching devices 54, 55, 56, and 57 connected in series between the first supply terminal $X_1$ and the second supply terminal $X_2$. An inductor 58 is connected between the control terminal and an interconnection between the two middle switching devices 55 and 56. A first diode 59 is connected from the control terminal to an interconnection of the two topmost switching devices 54 and 55, thus allowing a flow of current from the control terminal to the interconnection. A second diode 510 is connected from an interconnection of the two bottommost switching devices 56 and 57 to the control terminal, thus allowing a flow of current from the interconnection to the control terminal.

The balancing unit of Figure 6 comprises more components than the balancing unit of Figure 5. However, the balancing unit of Figure 6 has some advantages. Lower voltage ratings for the switching devices may be used, since the voltage between the supply terminals may be distributed to more switching devices. A harmonic distortion of the current may also be smaller than when using the balancing unit of Figure 5.

The number of capacitors in the second series connection is not limited to two. There may be more capacitors in the second series connection, or only a single capacitor between the inverter 2 inputs. If the second series connection is used, the neutral connection, when used, may be connected to an interconnection point $M$ of the second series connection. In some embodiments, the inverter 2 may have no neutral point connection on the DC link side.

The MPP of the DC power supplies may be identified by measuring their currents and measuring the voltages of capacitors of first series connection of capacitors.

As mentioned above, the arrangements in Figures 4 and 5 may also be extended to arrangements with more DC power supplies. Adding more DC power supplies to the series connection reduces an operating voltage required for an individual DC power supply. At the same time, an operational range, relative to the operating voltage, is increased.

Figure 7 illustrates an arrangement where m solar panels 1.1 - 1.$m$ are connected in series between inputs of an inverter 2, parallel to capacitors 3.1 - 3.$m$ in a first series connection of capacitors. The inverter 2 transfers power produced by the solar panels to a three-phase grid comprising phases $L_1$, $L_2$, and $L_3$. The embodiment also comprises $m$-1 balancing units 5.1 - 5.$m$-1 connected to each interconnection of the capacitors 3.1 - 3.$m$. A second series connection of capacitors 6.1 and 6.2 is connected between the inverter 2 inputs. The second series connection forms a DC link acting as a main energy storage. An interconnection point $M$ of the capacitors 6.1 and 6.2 is connected to a neutral input of the inverter 2. The interconnection point $M$ may also be connected to a grid neutral conductor $N$.

The equations 1 to 9 may be expressed in more generic terms. At a stationary operating point, where no power is stored into, or discharged from, the capacitors, the grid power $P_G$ has to be equal with a sum of powers $P_1$ to $P_m$ produced by $m$ power sources:

$$P_G = \sum_{n=1}^{m} P_n = \sum_{n=1}^{m} U_n I_n \ . \qquad (10)$$

Figure 7 also illustrates electrical quantities in a situation where no neutral conductor connection to a first series connection of capacitors is used. The steady-state DC link positive side current $I_{DC+}$ and negative side current $I_{DC-}$ can be calculated as:

$$I_{DC+} = I_{DC-} = \frac{\sum_{n=1}^{m} U_n I_n}{\sum_{n=1}^{m} U_n} \,.$$

(11)

Each balancing unit 5.*n* divides the first series connection of capacitors into a top half *TH,n* and a bottom half *BH,n*. The top half *TH,n* comprises capacitors 31 to 3*n* between the balancing unit 5.*n* control terminal and the inverter 2 positive input. The bottom half *BH,n* comprises capacitors 3.*n*+1 to 3.*m* between the balancing unit 5.*n* control terminal and the inverter 2 negative input.

A power between an *n*th balancing unit and its top half *TH,n* is

$$\Delta P_{TH,n} = \sum_{k=1}^{n} U_k I_{TH,n} \,,$$

(12)

where $I_{TH,n}$ is a current flowing between the *n*th balancing unit and its top half *TH,n*. A power between the *n*th balancing unit and its bottom half *BH,n* is

$$\Delta P_{BH,n} = \sum_{k=n+1}^{m} U_k I_{BH,n} \,,$$

(13)

where $I_{BH,n}$ is a current flowing between the *n*th balancing unit and its bottom half *BH,n*.

As the balancing unit neither produces nor consumes power, the powers of both halves have to be equal in size and opposite to each other:

$$\Delta P_{BH,n} + \Delta P_{TH,n} = 0 \,.$$

(14)

The following also applies to the DC link positive side current $I_{DC+}$ and the negative side current $I_{DC-}$:

$$I_{DC+} = I_1 + \sum_{n=1}^{m} I_{TH,n} \,,$$

(15)

$$I_{DC-} = I_m + \sum_{n=1}^{m} I_{BH,n} \,.$$

(16)

The equations 3 and 4 may be derived, using value *m* = 2, from equations 12, 13, 15, and 16.

In order for the capacitor voltages to remain constant, a sum of currents in an interconnection of capacitors in the first series connection has to be zero. Therefore, if two adjacent DC power supplies 1.*n* and 1.*n*+1 have different currents $I_n$ and $I_{n+1}$, a balancing current $I_{BAL,n}$ has to compensate for the difference. At the same time, the balancing current $I_{BAL,n}$ is the same as the difference between the currents $I_{TH,n}$ and $I_{BH,n}$ flowing between the $n$th balancing unit and the first series connection halves:

$$I_{BAL,n} = I_n - I_{n+1} = I_{BH,n} - I_{TH,n} \ .$$

(17)

On the other hand, by controlling the balancing current $I_{BAL,n}$, a ratio of voltages over the top half $TH,n$ and bottom half $BH,n$ can be controlled. Therefore, the voltages over the DC power sources can be controlled.

A relation between the currents $I_{TH,n}$ and $I_{BH,n}$ flowing between the $n$th balancing unit and the first series connection halves can be derived from equations 12, 13, and 14:

$$I_{BH,n} = -\left( \frac{\sum_{k=1}^{n} U_k}{\sum_{k=n+1}^{m} U_k} \right) I_{TH,n} = -G_n I_{TH,n} \ ,$$

(18)

wherein $G_n$ is a coefficient representing a ratio of voltages over the top half $TH,n$ and bottom half $BH,n$. From equation 18, it can be seen that

$$G_n = \frac{\sum_{k=1}^{n} U_k}{\sum_{k=n+1}^{m} U_k} \ .$$

(19)

From equations 17 and 18 it can be derived that the balancing current $I_{BAL,n}$ can be controlled with the current $I_{TH,n}$:

$$\begin{aligned} I_{BAL,n} &= -\left( G_n + 1 \right) I_{TH,n} \\ I_{BH,n} &= -G_n I_{TH,n} \end{aligned} \ .$$

(20)

In other words, the voltages over the capacitors of the first series connection may be kept at or controlled to a desired level by adjusting currents $I_{TH,n}$ and $I_{BH,n}$ flowing, and keeping a ratio between them according to equation 18.

If no neutral connection is used, or if a neutral connection to an interconnection $M$ of capacitors of the second series connection is used, equations 11 to 20 may be used. However, if the neutral conductor connects to the first series connection of capacitors, the DC link positive side current $I_{DC+}$ and the negative side current $I_{DC-}$ are calculated differently.

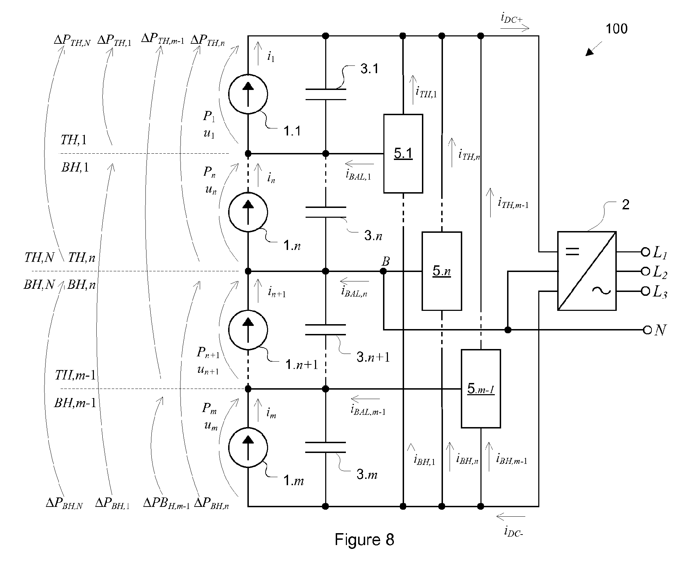

Figure 8 illustrates electrical quantities of an embodiment with a neutral conductor connection to a first series connection of capacitors. The neutral connection connects the grid neutral conductor to a control terminal of an $N$th balancing unit. The neutral connection also divides the first series connection into two halves, $TH,N$ and $BH,N$.

The neutral connection adds a new constraint to the equations, as the average powers $P_{TH,N}$ and $P_{BH,N}$ of the halves $TH,N$ and $BH,N$ have to be equal in order for the half-waves of the grid currents to be equal in size:

$$P_{TH,N} = \sum_{n=1}^{N} U_n I_{DC+} = P_{BH,N} = \sum_{n=N+1}^{m} U_n I_{DC-} \ .$$

(21)

In equation 21, $N$ represents the index number of a balancing unit 5.$n$ with a connection to the neutral conductor $N$. The grid power $P_G$ is the same as the sum of the powers $P_{TH,N}$ and $P_{BH,N}$ of the halves $TH,N$ and $BH,N$:

$$P_G = P_{TH,N} + P_{TH,N} = \sum_{n=1}^{N} U_n I_{DC+} + \sum_{n=N+1}^{m} U_n I_{DC-} \, . \qquad (22)$$

Because of the neutral connection, the currents $I_{DC+}$ and $I_{DC-}$ can be different. From equations 17 and 18, the following equations can be derived for the DC link positive and negative side currents:

$$I_{DC+} = \frac{\sum_{n=1}^{m} U_n I_n}{2 \sum_{n=1}^{N} U_n} \, , \qquad (23)$$

$$I_{DC-} = \frac{\sum_{n=1}^{m} U_n I_n}{2 \sum_{n=N+1}^{m} U_n} \, . \qquad (24)$$

As the currents $I_{DC+}$ and $I_{DC-}$ may be different, a current may have to flow through the interconnection B. However, if the zero sequence component is not allowed in the grid currents, the current has to originate from the inverter neutral input. The current through the interconnection B can be used to compensate for the difference $\Delta P_{DC}$ between the powers produced by the DC power sources 1.1 - 1.$N-1$ on the top half $TH,N$ and the DC power sources $1.N$- 1.$m$ on the bottom half $BH,N$. The difference $\Delta P_{DC}$ between the powers is given as

$$\Delta P_{DC} = \sum_{n=1}^{N-1} P_n - \sum_{n=N}^{m} P_n \, . \qquad (25)$$

The interconnection point $B$, and the balancing unit 5.$N$ connected to the interconnection point $B$, should be neither a power source nor a load. Thus, equation 14 also applies to a transferred power $\Delta P_{TH,N}$ between the top half $TH,N$ and the neutral connection, and a transferred power $\Delta P_{TH,N}$ between the bottom half $BH,N$ and the neutral connection. A power transferred from one half to the neutral connection has to be transferred from the neutral connection to the other half.

To balance the powers of the halves $TH,N$ and $BH,N$, an amount of power equal to half the difference $\Delta P_{DC}$ between the powers of the halves has to be transferred:

$$\frac{\Delta P_{DC}}{2} = \Delta P_{TH,N} = -\Delta P_{BH,N} \, . \qquad (26)$$

The balancing unit 5.$N$, to which the neutral connection is connected, can transfer also the half of the difference $\Delta P_{DC}$ between the powers of the halves $TH,N$ and $BH,N$ while at the same time producing a balancing $I_{BAL,N}$ current for two interconnected DC power sources.

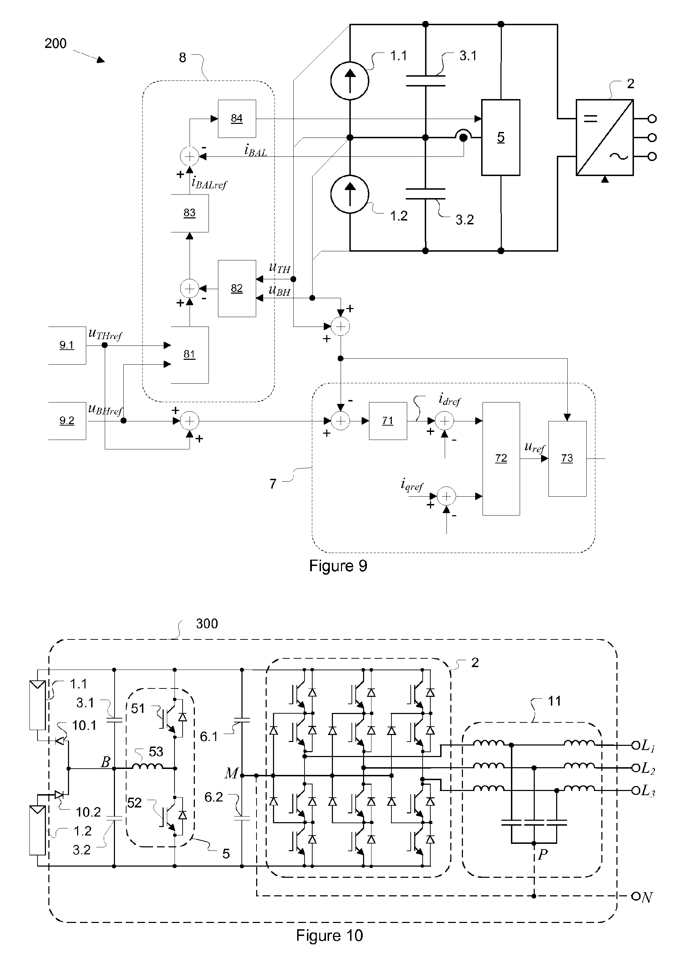

An embodiment of a control method according to the disclosure is illustrated in Figure 9. Two separate DC power supplies 1.1 and 1.2 are connected to an apparatus 200. In Figure 9, the DC power supplies 1.1 and 1.2 are solar panel chains, and the apparatus 200 is a solar power plant. The solar panel chains 1.1 and 1.2 are illustrated as current sources. They have voltages and currents independent of each other.

The solar power plant 200 comprises an inverter 2 and a first series connection of two capacitors 3.1 and 3.2. The inverter 2 comprises a positive input, a negative input, and means for controlling a voltage between the inputs. The capacitors 3.1 and 3.2 form a DC link between the inverter 2 inputs. Both capacitors 3.1 and 3.2 comprise a first terminal and a second terminal. Both solar panel chains 1.1 and 1.2 are connected in parallel with a capacitor of the first series connection of capacitors. The number of capacitors and solar panel chains is not limited to two.

The solar power plant 200 also comprises a balancing unit 5 connected from a first supply terminal to the inverter 2 positive input, and, from a second supply terminal connected to the inverter negative input. A control terminal is connected to an interconnection of the capacitors 3.1 and 3.2 in the first series connection of capacitors. As the number of capacitors and solar panel chains is not limited to two, in some embodiments more than one balancing unit may be used.

The balancing unit 5 divides the series connection of capacitors 3.1 and 3.2 into two halves: a top half *TH* and a bottom half *BH.* The top half *TH* comprises the capacitor 3.1, and the bottom half *BH* comprises the capacitor 3.2.

If more capacitors in the first series connection and more balancing units are used, each balancing unit 5.*n* divides the first series connection of capacitors into a top half *TH,n* and a bottom half *BH,n.* The top half *TH,n* comprises capacitors between the balancing unit 5.*n* control terminal and the inverter 2 positive input. The bottom half *BH,n* comprises capacitors between the balancing unit 5.*n* control terminal and the inverter 2 negative input.

The control method comprises two types of controllers. A first controller 7 controls a voltage between the inverter 2 inputs. A second controller 8 controls a voltage ratio between a top half *TH,n* and the bottom half *BH,n* of a balancing unit 5.*n*. The control method comprises a second controller 8 for each balancing unit 5.*n*. The balancing unit or units are used for controlling the ratios between the top halves and the bottom halves of each balancing unit. In Figure 9, the apparatus comprises one balancing unit.

In the embodiment, values for solar panel chain voltage references are determined. Also voltages over solar panel chains are determined. For instance, the voltages over the DC link capacitors may be measured.

In the embodiment of Figure 9, both of the solar panel chains operate on the basis of their own maximum power point tracker (MPPT). The MPPTs of the solar panel chain provide a voltage reference for each solar chain.

The first controller 7 controls the voltage between the inverter 2 inputs on the basis of the voltage references and the solar panel chain voltages. By controlling the voltage between the inputs, the inverter 2 controls a power balance between the grid power $P_G$ and the power produced by the DC power supplies.

The first controller 7 calculates a sum of the voltages over the DC devices and a sum of the DC device voltage references. In Figure 9, $u_{TH}$ and $u_{BH}$ represent the voltages over the DC devices, and $u_{THref}$ and $u_{BHref}$ represent the DC device voltage references. An error term is then calculated from a difference between the sum of the voltages over the DC devices and the sum of the DC device reference voltages. The voltage between the inverter inputs is then controlled on the basis of the error term.

In Figure 9, a voltage controller 71 is used for determining a reference current. A current controller 72 uses the reference current $i_{dref}$ to determine a reference voltage vector $u_{ref}$. A modulator 73 then produces a voltage according to the reference voltage vector $u_{ref}$.

When necessary, the first controller 7 also controls the reactive power on the basis of an $i_d/i_q$ control producing vector references for the modulator 73. If a neutral connection is used, the first controller may produce a voltage reference without a zero-sequence component. The inverter 2 is then used for producing voltage corresponding with the voltage reference. The inverter 2 may, for instance, comprise a two-level or a three-level inverter bridge.

The second controller 8 controls a ratio between voltages of capacitors of the first series connection on the basis of the voltage references and the solar panel chain voltages. The second controller 8 controls the ratio using the balancing unit 5. In Figure 9, the balancing unit 5 comprises means for controlling the ratio between the top half *TH* and the bottom half *BH.*

Although only one balancing unit 5 is used in the embodiment of Figure 9, more balancing units may be used in the method. In generic terms, the method comprises a second controller 8.*n* for each balancing unit 5.*n.* Each second controller 8.*n* groups the voltages over the first series connection capacitors into two groups, a top half *TH,n* and a bottom half *BH,n,* wherein the top half *TH,n* comprises capacitors 3.1 to 3.*n* between the balancing unit 5.*n* control terminal and the inverter 2 positive input, and the bottom half *BH,n* comprises capacitors 3.*n*+1 to 3.m between the balancing unit 5.*n* control terminal and the inverter 2 negative input.

Each second controller 8.*n* calculates a first sum from the voltage references of the DC power supplies 1.1 to 1.*n* connected to the capacitors 3.1 to 3.*n* of the top half *TH,n*, and a second sum from the voltage references of the DC power supplies 1.*n*+1 to 1.*m* connected to the capacitors 3.*n*+1 to 3.m of the bottom half *BH,n.* A voltage reference ratio is then calculated by dividing the first sum by a sum of the second sum. In Figure 9, means 81 are used for calculating the voltage reference ratio. MPPTs 9.1 and 9.2 provide the voltage references $u_{THref}$ and $u_{BHref}$ for the top half *TH* and the bottom half *BH.* As the top half *TH* and the bottom half *BH* both comprise only one DC power supply, the first and second sums can be represented by the voltage references $u_{THref}$ and $u_{BHref}$.

Each second controller 8.*n* calculates a third sum from the voltages over the DC power supplies connected to the capacitors of the top half, and a fourth sum from the voltages over the DC power supplies connected to the capacitors of the bottom half. A voltage ratio is then calculated by dividing the third sum by a sum of the fourth sum. In Figure 9, means 82 are used to calculate the voltage ratio. As the top half *TH* and the bottom half *BH* both comprise only one DC power supply, the third and fourth sums can be represented by the voltages $u_{TH}$ and $u_{BH}$.

Next, the second controller 8.*n* calculates a ratio error term from a difference between the voltage ratio and the voltage reference ratio. A voltage ratio of the the top half *TH,n* and the bottom half *BH,n* is then controlled on the basis of the ratio error.

In Figure 9, the ratio error is calculated from the voltage reference ratio and the voltage ratio produced by means 81 and 82, respectively. A voltage ratio controller 83 then produces a current reference $i_{BALref}$ on the basis of the ratio error. A modulator 84, operating on the basis of a difference between the current reference $i_{BALref}$ and a measured current $i_{BAL}$, controls the balancing unit 5. The balancing unit may, for instance, be implemented in a manner similar to that shown in Figure 5. In such a case, the modulator controls the switching devices 51 and 52.

In Figure 9, as voltage ratio control is used, operation of both of the solar panel chains at their MPP may be achieved even with the balancing unit 5 dimensioned to transfer only half of the maximum difference between solar panel chain powers.

If a neutral connection is used, the method according to the disclosure enables symmetrical grid currents without a zero-sequence component even at differing solar panel chain powers. DC link common-mode voltages and currents may be brought to an acceptable level with no need to use an isolating transformer.

Figure 10 illustrates an arrangement wherein an apparatus 300 for controlling voltages over series-connected DC power supplies 1.1 and 1.2 comprises an inverter 2 and a first series connection of two capacitors 3.1 and 3.2 between the inverter 2 inputs. The inverter 2 uses a three-level topology. The inverter 2 transfers powers produced by the DC power supplies 1.1 and 1.2 to a grid. The inverter 2 comprises a positive input, a negative input, a neutral input, and means for controlling a voltage between the inputs.

The apparatus comprises a balancing unit 5. The balancing unit 5 comprises two switching devices 51 and 52 and an inductor 53 as means for controlling a balancing current.

The two switching devices 51 and 52 are connected in series between the inverter 2 positive input and negative input. Switching devices of balancing units may have to have higher voltage ratings than the switching devices of the inverter bridge. However, this has no significant effect on the losses of the balancing units, since only currents required for controlling the voltages flow through them. The current ratings of the balancing unit switching devices may be relatively small compared with the currents at DC+ and DC-bars.

The inductor 53 is connected between an interconnection point of the switching devices and an interconnection point *B* of the two capacitors 31 and 32 in the first series connection of capacitors.

The apparatus 300 further comprises a second series connection of capacitors 6.1 and 6.2 between the inverter 2 positive and negative input terminal. The balancing unit 5 controls the voltages of capacitor 3.1 and 3.2. The potentials at the interconnection point *B* and at an interconnection point M of the capacitors 6.1 and 6.2 may be completely different.

Compared with the capacitors 6.1 and 6.2, a somewhat larger voltage rating is required from the balancing capacitors 3.1 and 3.2. The voltages over the capacitors 3.1 and 3.2 may fluctuate more than the voltages over the capacitors 6.1 and 6.2 since the power supplies 1.1 and 1.2 may have different voltages over them, for instance because of different MPPs. However, the capacitors 3.1 and 3.2 of the first series connection capacitors do not act as the main storage for energy and their capacitance may be smaller. Therefore, instead of electrolytic capacitors, the capacitors 3.1 and 3.2 of the first series connection capacitors may, for instance, be film capacitors. Film, or other, capacitors may also be used in other embodiments where the second series connection of capacitors is used.

The apparatus 300 also comprises protective diodes 10.1 and 10.2 connected between the DC power supplies 1.1 and 1.2 and the capacitors 31 and 32 of the first series connection. Protective diodes 10.1 and 10.2 are added to the arrangement in order to ensure that balancing of capacitor voltages does not cause a reversed flow of power in the DC power supplies 1.1 and 1.2, even when a fault has occurred. Protective diodes may be applied to all of the above embodiments.

In Figure 10, the inverter 2 comprises a neutral input which may be connected to the interconnection point *M*. The apparatus may also comprise an output filter. In Figure 10, an LCL-filter 11 is connected to an output of the inverter 2. A star connection point P of the output filter may be connected to the interconnection point *M*. For instance, if the inverter 2 neutral input is connected to the interconnection point *M*, a connection between the star connection point *P* and the interconnection point *M* may be used. The apparatus 300 may also comprise a connection from the neutral potential *N* to the interconnection *M*, and the star connection point *P*, therefore clamping the interconnection *M* and the star connection point *P* to the neutral potential *N*. Clamping the interconnection *M* effectively reduces common-mode voltages. The clamping of the interconnection *M*, together with the three-level topology of the inverter 2, makes the apparatus very suitable for solar panel applications.

The main limiting factor for the maximum voltage in the presented embodiment is a voltage rating of switching devices of the inverter 2. For instance, if the voltage rating of switching devices of the inverter is 600 V, a maximum voltage for the DC link of the inverter is 1200 V. An open-circuit voltage for the solar panels is then 600 V.

When connected to a 400 V grid, the voltage range for a panel is 330 V to said 600 V. The range compares to ranges of single-phase applications on the market, and is therefore usable and competitive also in three-phase arrangements.

Further, a 1200 V maximum DC link voltage may be reached only when no power is fed to the grid. A half of the maximum DC link voltage causes no problems to the 600 V switching devices, since voltages of solar panels drop as power is drawn from them.

The methods and related apparatuses are described above with reference to the respective functions they perform according to exemplary embodiments. It is to be understood that one or more of these elements and functions can be implemented in a hardware configuration. For example, the respective components can comprise a computer processor configured to execute computer-readable instructions (e.g. computer-readable software), a nonvolatile computer-readable recording medium, such as a memory element (e.g. ROM, flash memory, optical memory, etc.) configured to store such computer-readable instructions, and a volatile computer-readable recording medium (e.g. RAM) configured to be utilized by the computer processor as working memory while executing the computer-readable instructions. The methods and related apparatuses may also be configured to sense, generate and/or operate in accordance with analog signals, digital signals and/or a combination of digital and analog signals to carry out their intended functions.

The apparatus and the method according to the disclosure, and their embodiments, significantly improve the technology currently being used in three-phase solar power systems. However, the field of application is not limited to three-phase systems. Any number of phases may be used on the AC side. Further, the apparatus and the method may be applied to other energy-producing DC applications. Also, instead of balancing voltages over power suplies, the apparatus and the method of the disclosure may be used for controlling voltages over DC loads.

It will be apparent to a person skilled in the art that the inventive concept can be implemented in various ways. The invention and its embodiments are not limited to the examples described above but may vary within the scope of the claims.

**Claims**

1. An apparatus for controlling voltages over series-connected DC power supplies (1.1 - 1.*m*), comprising
   an inverter (2) comprising a positive input, a negative input, and means for controlling a voltage between the inputs, and
   a first series connection of two or more capacitors (3.1 - 3.*m*) between the inverter (2) inputs, each capacitor (3.*n*) comprising a first terminal and a second terminal, wherein the apparatus comprises
   a first and a second connection terminal for each capacitor (3.*n*), adapted to be connected to a DC power supply, wherein the first connection terminal is connected to the capacitor first terminal, and the second connection terminal is connected to the capacitor second terminal,
   one or more balancing units (5.1 - 5.*m*-1) connected between the inverter (2) inputs, comprising means for controlling ratios between first series connection capacitor voltages.

2. An apparatus according to claim 1, wherein the balancing unit (5.*n*) comprises
   a first supply terminal connected to the inverter (2) positive input,
   a second supply terminal connected to the inverter (2) negative input,
   a control terminal connected to an interconnection of two capacitors in the first series connection of capacitors, and
   means for controlling a current through the control terminal.

3. An apparatus according to claim 2, wherein the means for controlling current through the control terminal comprise two switching devices (51, 52) connected in series between the first supply terminal and the second supply terminal, an inductor (53) connected between an interconnection between the switching devices (51,52) and the control terminal.

4. An apparatus as claimed in any one of claims 1 to 3, wherein the apparatus comprises a second series connection of one or more capacitors between the inverter terminals.

5. An apparatus according to claim 4, wherein the inverter (2) comprises a neutral input, and the inverter (2) neutral input is connected to an interconnection of two capacitors of the second series connection of capacitors.

6. An apparatus according to claim 4 or 5, wherein the capacitors (3.1, 3.2) of the first series connection capacitors are film capacitors.

7. An apparatus as claimed in any one of the preceding claims, wherein the apparatus comprises diodes connected between the DC power supplies and the capacitors of the first series connection

8. An apparatus as claimed in any one of the preceding claims, wherein the apparatus is adapted to be supplied by solar panels.

9. A method for controlling voltages over series-connected DC power supplies connected to an apparatus comprising an inverter comprising a positive input, a negative input, and means for controlling a voltage between the inputs, a first series connection of two or more of capacitors between the inverter inputs, each capacitor comprising a first terminal and a second terminal, wherein the apparatus comprises one or more balancing units comprising a first supply terminal connected to the inverter positive input, a second supply terminal connected to the inverter negative input, a control terminal connected to an interconnection of two capacitors in the first series connection of capacitors and means for controlling a current through the control terminal, and the method comprising steps of:

connecting each of the DC power supplies in parallel with a capacitor of the first series connection of capacitors, determining values for DC power supply voltage references,
determining voltages over each DC power supply,
controlling a voltage between the inverter inputs on the basis of the voltage references and the DC power supply voltages, and
controlling ratios between voltages of capacitors of the first series connection on the basis of the voltage references and the DC power supply voltages by using one or more balancing units.

10. A method according to claim 9, wherein controlling the ratios between voltages of capacitors of the first series connection comprises, for each balancing unit,
grouping the voltages over the first series connection capacitors into two groups, a top half and a bottom half, wherein the top half ($TH,n$) comprises capacitors between the balancing unit ($5n$) control terminal and the inverter positive input, and the bottom half ($BH,n$) comprises capacitors between the balancing unit ($5n$) control terminal and the inverter negative input,
calculating a first sum from the voltage references of the DC power supplies connected to the capacitors of the top half,
calculating a second sum from the voltage references of the DC power supplies connected to the capacitors of the bottom half,
calculating a voltage reference ratio by dividing the first sum by a sum of the second sum,
calculating a third sum from the voltages over the DC power supplies connected to the capacitors of the top half,
calculating a fourth sum from the voltages over the DC power supplies connected to the capacitors of the bottom half,
calculating a voltage ratio by dividing the third sum by a sum of the fourth sum,
calculating a ratio error term from a difference between the voltage ratio and voltage reference ratio,
controlling a voltage ratio between the two capacitors on the basis of the ratio error.

11. A method according to claim 9 or 10, wherein controlling the voltage between the inverter inputs comprises steps of:

calculating a sum of the voltages over the DC devices,
calculating a sum of the DC device voltage references,
calculating an error term from a difference between the sum of the voltages over the DC devices and the sum of the DC device reference voltages,
controlling, using the inverter, the voltage between the inverter inputs on the basis of the error term.

Figure 1

Figure 2

Figure 3

Figure 4

Figure 5

Figure 6

Figure 7

Figure 8

Figure 9

Figure 10

Europäisches
Patentamt

European
Patent Office

Office européen
des brevets

**EUROPEAN SEARCH REPORT**

Application Number

EP 11 15 2030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 102 19 956 A1 (WEBASTO VEHICLE SYS INT GMBH [DE]) 30 April 2003 (2003-04-30) * abstract * * paragraphs [0012], [0027] - [0035] * * figures 5,6 * | 1-11 | INV. H02J7/35 |
| A | OLIVIER STALTER ET AL: "Advanced solar power electronics", POWER SEMICONDUCTOR DEVICES&IC'S (ISPSD), 2010 22ND INTERNATIONAL SYMPOSIUM ON, IEEE, PISCATAWAY, NJ, USA, 6 June 2010 (2010-06-06), pages 3-10, XP031729206, ISBN: 978-1-4244-7718-0 * figures 1,3,10,11,14 * * IV, VI-D, VI-E * | 1-11 | |
| X | WO 2005/112551 A2 (HANSUNG ENGINEERING CO LTD [KR]; LEE HYEON WOO [KR]; KOH KANG HOON [KR] 1 December 2005 (2005-12-01) * abstract * * paragraph [0013] - paragraph [0018] * * figure 3 * | 1-11 | TECHNICAL FIELDS SEARCHED (IPC) H02J |
| A | SAMIR KOURO ET AL: "Recent Advances and Industrial Applications of Multilevel Converters", IEEE TRANSACTIONS ON INDUSTRIAL ELECTRONICS, IEEE SERVICE CENTER, PISCATAWAY, NJ, USA, vol. 54, no. 8, 1 August 2010 (2010-08-01) , pages 2553-2580, XP011311023, ISSN: 0278-0046 * figure 17 * | 1,4,5 | |

-/--

The present search report has been drawn up for all claims

| Place of search | Date of completion of the search | Examiner |
|---|---|---|
| The Hague | 30 November 2011 | Gotzig, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 11 15 2030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 249 457 A1 (NXP BV [NL]) 10 November 2010 (2010-11-10) * abstract * * paragraph [0011] - paragraph [0015] * * figure 8 * | 1-3,9-11 | |
| A | US 2009/141522 A1 (ADEST MEIR [IL] ET AL) 4 June 2009 (2009-06-04) * figures 5A,5B * | 1-3,9-11 | |
| X | US 2010/289338 A1 (STAUTH JASON T [US] ET AL) 18 November 2010 (2010-11-18) * figures 9,10,11A,11B,36 * | 1-11 | |

TECHNICAL FIELDS
SEARCHED       (IPC)

The present search report has been drawn up for all claims

| Place of search | Date of completion of the search | Examiner |
|---|---|---|
| The Hague | 30 November 2011 | Gotzig, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 15 2030

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2011

| Patent document cited in search report | | | Publication date | Patent family member(s) | | Publication date |
|---|---|---|---|---|---|---|
| DE | 10219956 | A1 | 30-04-2003 | NONE | | |
| WO | 2005112551 | A2 | 01-12-2005 | NONE | | |
| EP | 2249457 | A1 | 10-11-2010 | EP | 2249457 A1 | 10-11-2010 |
| | | | | WO | 2010128363 A1 | 11-11-2010 |
| US | 2009141522 | A1 | 04-06-2009 | NONE | | |
| US | 2010289338 | A1 | 18-11-2010 | US | 2010289338 A1 | 18-11-2010 |
| | | | | WO | 2011100167 A1 | 18-08-2011 |

EPO FORM P0459

For more details about this annex : see Official Journal of the European Patent Office, No. 12/82